# EUROPÄISCHE PATENTSCHRIFT

(11) **EP 2 796 032 B1**
(45) Veröffentlichungstag und Bekanntmachung des Hinweises auf die Patenterteilung: **28.09.2016**
(21) Anmeldenummer: 14157982.1
(22) Anmeldetag: 06.03.2014
(51) Int. Cl.: A01F 12/44

(54) **Mähdrescher mit einer Reinigungseinrichtung**
Combine harvester with a cleaning device
Moissonneuse-batteuse dotée d'un dispositif de nettoyage

(30) Priorität: 26.03.2013 DE 102013103102
(43) Veröffentlichungstag der Anmeldung: 29.10.2014
(73) Patentinhaber: CLAAS Selbstfahrende Erntemaschinen GmbH, 33428 Harsewinkel (DE)
(72) Erfinder: Claes, Ulrich, 49201 Dissen (DE)

(56) Entgegenhaltungen:
- EP-A1- 1 166 617
- DE-A1- 2 214 131
- DE-A1- 10 111 531
- DE-U1- 9 112 209
- US-A- 4 502 493
- US-A- 5 525 108

## Beschreibung

Die vorliegende Erfindung betrifft einen Mähdrescher mit einer Reinigungseinrichtung gemäß dem Oberbegriff des Anspruches 1.

Aus der Offenlegungsschrift US 2010 0113113 A1 ist ein Mähdrescher mit einer Reinigungseinrichtung gemäß dem Oberbegriff des Anspruches 1 bekannt. Die Reinigungseinrichtung umfasst zumindest ein luftdurchströmtes Sieb, welches eine Vielzahl von schwenkbar in einem Siebrahmen gelagerte Lamellen aufweist, die durch ein Verstellmittel miteinander verbunden sind. Die Lamellen sind in einem sich in Längsrichtung des Siebes erstreckenden Tragrahmen angeordnet, der eine Vielzahl von zueinander benachbart angeordneten Schlitzen aufweist, die sich in vertikaler Richtung des Tragrahmens erstrecken. Die vertikalen Schlitze verzweigen sich baumwurzelartig in vertikaler Richtung und weisen jeweils die gleiche Tiefe auf, so dass die Schwenkachsen der Lamellen auf einer Ebene liegen. Somit sind alle Lamellen gemeinsam durch das Verstellmittel betätigbar, unabhängig von ihrer Positionierung in einem der Schlitze. Durch das Schwenken der Lamellen lässt sich die Sieböffnungsweite verändern, um die Qualität und Quantität des Reinigungsprozesses an unterschiedliche Erntebedingungen anpassen zu können. Darüber hinaus ist es erforderlich, die Sieböffnungsweite an unterschiedliche Erntegutarten anpassen zu können, was gemäß der US 2010 0113113 A1 dadurch erreicht wird, dass die axialen Abstände der Schwenkachsen der Lamellen zueinander durch Umsetzen der Lamellen in dem Tragahmen variierbar sind, indem diese in verschiedenen Bereichen der sich baumwurzelförmig verzweigenden Schlitze angeordnet werden. Hierdurch ergeben sich zwischen den Lamellen unterschiedliche Sieböffnungsweiten. Neben dem Umstand, dass das manuelle Umsetzen der Lamellen sehr zeitaufwändig ist, stellen sich in geschlossener Position des Siebes über die Sieblänge gesehen unterschiedliche Öffnungsweiten ein, wenn sich die Lamellen im Wesentlichen in einer horizontalen Position, das heißt zur Siebebene parallelen Position befinden, die das unerwünschte Hindurchtreten von Kurzstroh, Spreu und dergleichen Fremdmaterial zulassen, was mitsamt dem Korn in den Korntank des Mähdreschers überführt wird und zu einer Verunreinigung führt. Das Hindurchtreten von Fremdmaterial resultiert aus einem vergrößerten axialen Abstand des Drehpunktes der Lamellen zueinander in Folge des Umsetzens bei gleichbleibender Lamellengröße.

Aus der US 5,525,108 ist eine Reinigungseinrichtung bekannt geworden, deren Sieböffnungsweiten so einstellbar sind, dass sie mit zunehmender Sieblänge zunehmen. Dies hat zur Folge, dass mit abnehmender Konzentration an Körnern im Gutstrom und zugleich abnehmender Wirkung des Reinigungsgebläses die Abscheidung von Nichtkornbestandteilen zunimmt, was neben einer verschlechterten Reinigungswirkung insgesamt zu einer Reduzierung der Durchsatzleistung der Reinigung führt.

Aus der Offenlegungsschrift EP 1 068 793 A1 ist ein Sieb für einen Mähdrescher bekannt, das aus einer Reihe sich quer erstreckender Lamellen mit Reihen von Zähnen besteht. Die Lamellen sind durch ein Verstellmittel gleichzeitig bewegbar, um die Sieböffnungsweite anpassen zu können. Hierbei stellt sich über die gesamte Sieblänge eine konstante Sieböffnungsweite ein.

Weiterhin ist aus der Offenlegungsschrift DE 101 11 531 A1 ist ein Sieb für einen Mähdrescher bekannt, welches in zwei parallel nebeneinander angeordnete Teilsiebe unterteilt ist, die mit quer verlaufenden Lamellen versehen sind, die jeweils durch einen Verstellantrieb betätigbar sind, wodurch sich auf den Teilsieben unterschiedliche Sieböffnungsweiten einstellen lassen. Die Sieböffnungsweite der Teilsiebe jedoch ist in Längsrichtung des Siebes konstant.

Aufgabe der Erfindung ist es, einen Mähdrescher mit Reinigungseinrichtung der eingangs genannten Art derart weiterzubilden, dass sich dieser durch eine höhere Reinigungsleistung auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass das Sieb mindestens zwei hintereinander angeordnete Abschnitte mit darin gelagerten, durch Verstellmittel gemeinsam betätigbaren Lamellenreihen aufweist, wobei zumindest in zwei benachbarten Abschnitten sich bei einer Betätigung der Verstelleinrichtung bei gleicher Lamellengröße aller Lamellenreihen unterschiedliche Öffnungswinkel gegenüber einer vom Siebrahmen umfassten horizontalen Siebebene einstellen. Hierdurch wird erreicht, dass in einem vorderen Siebbereich, in welchem im Allgemeinen eine hohe Abscheiderate der Körner gegeben ist und ein hoher Luftvolumenstrom eines Reinigungsgebläses diesen Siebbereich durchströmt, eine andere Sieböffnungsweite einstellbar ist, als in einem hinteren Bereich des Siebes, in dem die Abscheiderate auf Grund der abnehmenden Konzentration an abzuscheidenden Körnen wie auch der Luftvolumenstrom abnehmen. Es findet somit eine effiziente Anpassung der Sieböffnungsweite an den Abscheideverlauf über die Sieblänge statt, was sich qualitativ und quantitativ positiv auf den Reinigungsprozess auswirkt. Diese Lösung erlaubt es, in allen Abschnitten eines Siebes Lamellenreihen zu verwenden, die sich, im Gegensatz zu der US 2010 0113113 A1, durch die gleiche Lamellengröße auszeichnen.

Dabei können alle hintereinander angeordneten Abschnitte des mindestens einen Siebes unterschiedliche Öffnungswinkel der jeweiligen Lamellenreihen innerhalb eines Abschnittes aufweisen.

Alternativ kann auch eine wechselweise Variation der Öffnungswinkel vorgesehen sein, so dass bei einer Unterteilung in mehr als zwei Abschnitte die jeweiligen Lamellenreihen eines ersten und eines dritten Abschnittes den gleichen Öffnungswinkel aufweisen, während der Öffnungswinkel der jeweiligen Lamellenreihen des zweiten Abschnittes von dem des ersten und dritten Abschnittes verschieden ist.

Die Lamellenreihen in dem jeweils vorangehenden Abschnitt weisen einen größeren Öffnungswinkel auf als in dem nachfolgenden Abschnitt. Somit kann sich in dem vorderen Bereich des Siebes eine größere Sieböffnungsweite einstellen, als in dem hinteren Bereich des Siebes, was sich positiv auf die Quantität der Reinigungseinrichtung auswirkt, da in dem vorderen Bereich auf Grund der größeren Sieböffnungsweite mehr Korn abgeschieden werden kann, während der größere Luftvolumenstrom in dem vorderen Bereich des Siebes dafür sorgt, dass Kurzstroh und Spreu trotz größerer Sieböffnungsweite nicht durch die Sieböffnungen hindurchtreten können, sondern durch den Luftstrom abtransportiert werden. Im hinteren Bereich des Siebes stellt sich entsprechend des kleineren Öffnungswinkels der Lamellenreihen eine kleinere Sieböffnungsweite ein, so dass auch in dem hinteren Bereich trotz des abnehmenden Luftvolumenstromes der Anteil an Spreu oder Kurzstroh, der durch das Sieb hindurchtreten kann, minimiert wird.

Insbesondere können bei einer Überführung der Lamellenreihen aller Abschnitte in eine zur Siebebene im Wesentlichen parallele Position, in der die Sieöffnungsweite des Siebes minimiert ist, alle Abschnitte des Siebes die gleiche Sieböffnungsweite aufweisen. Der sich hieraus ergebende Vorteil ist, dass sich hierdurch das Hindurchtreten von Fremdmaterial, insbesondere bei der Verarbeitung von kleinsamigen Leguminosen, gegenüber dem Stand der Technik signifikant reduzieren lässt.

Vorteilhafterweise können die Drehachsen durch die Verstellmittel kinematisch miteinander gekoppelt sein. Hierdurch lassen sich die Lamellenreihen der jeweiligen Abschnitte des Siebes gemeinsam betätigen, so dass es keiner getrennten Betätigung für den jeweiligen Abschnitt bedarf, um unterschiedliche Öffnungswinkel der Lamellenreihen eines Abschnittes respektive Sieböffnungsweiten eines Abschnittes einstellen zu können, um diese an unterschiedliche Fruchtarten anpassen zu können.

Insbesondere können die Lamellenreihen jeweils auf einem gekröpften Lamellendraht angeordnet sein, der jeweils drehbar in dem Siebrahmen gelagert ist.

Hierbei können die Lamellendrähte des jeweiligen Abschnittes eine unterschiedliche Kröpfung aufweisen. Die unterschiedliche Kröpfung der Lamellendrähte in dem jeweiligen Abschnitt bewirkt eine Änderung des Hebelverhältnisses, wodurch sich bei den Lamellenreihen bei gleichem Verstellweg der Verstelleinrichtung unterschiedliche Öffnungswinkel einstellen. Bevorzugt ist die Kröpfung der Lamellendrähte in einem vorangehenden Abschnitt geringer als die Kröpfung in einem darauffolgenden Abschnitt des Siebes, so dass sich die Lamellenreihen eines vorangehenden Abschnittes schneller öffnen können als die des darauffolgenden Abschnittes und wenn jeder Abschnitt voneinander abweichende Öffnungswinkel aufweist. Im Fall einer wechselweise Variation der Öffnungswinkel variiert die Kröpfung der Lamellendrähte eines jeden Abschnitts entsprechend:

Alternativ können die Verstellmittel als eine zumindest zweigeteilte Verstellstange ausgeführt sein, die jeweils eine Hebelübersetzung zwischen den Teilabschnitten der Verstellstange aufweist. Auf diese Weise lassen sich durch die zentrale Betätigung der mehrteiligen Verstellstange unterschiedliche Öffnungswinkel der Lamellen in den Abschnitten einstellen, wobei die Kröpfung der Lamellendrähte aller Abschnitte gleich ist.

Als eine weitere Alternative können die Verstellmittel als zumindest zwei Zahnstangen ausgeführt sein, die jeweils von einem Zahnrad in axialer Richtung bewegbar sind. Vorzugsweise können die Verstellmittel elektromotorisch antreibbar sein.

Alternativ können die Verstellmittel pneumatisch oder hydraulisch antreibbar sein.

Die vorliegende Erfindung wird nachstehend anhand von in den Zeichnungen dargestellten Ausführungsbeispielen näher erläutert.

Es zeigen:
- Fig. 1: eine schematische Seitenansicht eines Mähdreschers;
- Fig. 2: eine Draufsicht auf eine Anordnung der Verstelleinrichtung an einer Reinigungsvorrichtung;
- Fig. 3: eine schematische Teilansicht eines Siebrahmens mit verstellbaren Lamellenreihen gemäß einer ersten Ausführungsform;
- Fig. 4: eine schematische Teilansicht eines Siebrahmens mit verstellbaren Lamellenreihen gemäß einer zweiten Ausführungsform.

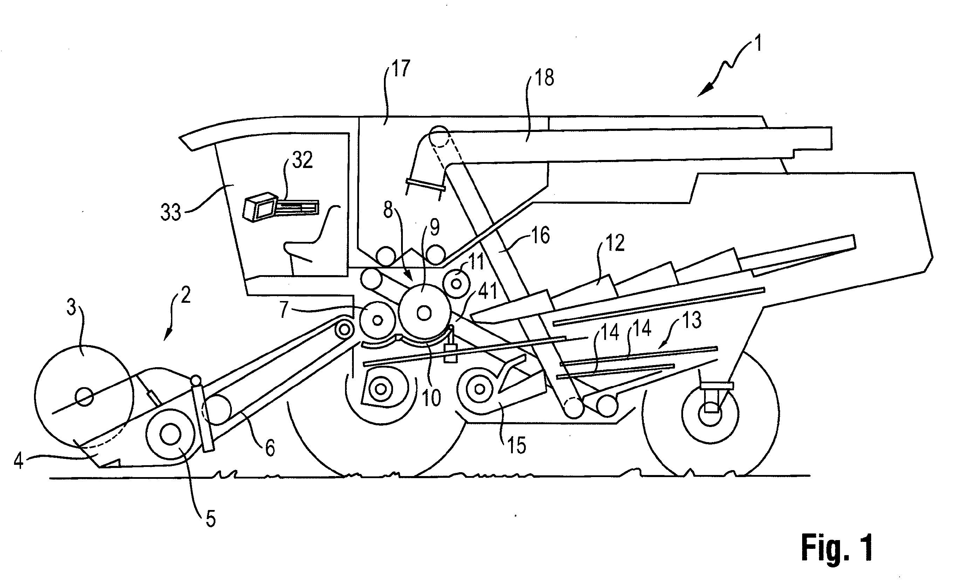

Die Darstellung in Fig. 1 zeigt eine schematische Seitenansicht eines selbstfahrenden Mähdreschers 1 mit einem so genannten Tangential- oder auch Querflussdreschwerk 8 und einem dahinter angeordneten Hordenschüttler 12 als Abscheideeinrichtung. Unterhalb des Hordenschüttlers 12 befindet sich eine Reinigungseinrichtung 13, bestehend aus mehreren übereinander angeordneten Sieben 14 und einem Gebläse 15. Die Erfindung ist aber ausdrücklich nicht auf derartige Mähdreschertypen beschränkt. So kann die Abscheidevorrichtung auch nach dem Axialflussprinzip arbeiten, wie es beispielsweise aus der DE 100 62 429 A1 bekannt ist. Hierzu kommt zumindest ein Abscheiderotor zum Einsatz, der, sich in Längsrichtung des Mähdreschers 1 erstreckend, hinter dem Dreschwerk 8 angeordnet ist und den Hordenschüttler 12 als Abscheideeinrichtung ersetzt.

Die Arbeitsweise eines solchen Mähdreschers 1 mit Hordenschüttler 12 als Abscheideeinrichtung wird nachfolgend beschrieben:
Das Erntegut wird zunächst mittels einer Haspel 3 des Mähtischs 2 in Richtung der Mäheinrichtung 4 geneigt und von Mähmessern abgeschnitten. Das Erntegut wird dann über eine Einzugsschnecke 5 und einen Schrägförderer in einem Einzugskanal 6 zum Eingang des Dreschwerks 8 transportiert.

Am Eingang des Dreschwerks 8 befindet sich eine Vorbeschleunigertrommel 7 und dahinter in Gutflussrichtung eine Dreschtrommel 9 mit einer quer zur Gutflussrichtung, das heißt quer zur Mähdrescherlängsachse, liegenden Rotationsachse. Unterhalb der Dreschtrommel 9 befindet sich ein passend geformter Dreschkorb 10. Ein solcher Dreschkorb 10 besteht üblicherweise aus zahlreichen mit Abstand zueinander angeordneten, in Umlaufrichtung der Dreschtrommel 9 halbkreisförmig gebogenen Rippen, die über zahlreiche parallel und quer verlaufende Stege verbunden sind.

Das aus dem Einzugskanal 6 kommende Erntegut wird durch die Vorbeschleunigertrommel 7 erfasst und dann weiter von der Dreschtrommel 9 durch den zwischen der Dreschtrommel 9 und dem Dreschkorb 10 befindlichen Dreschspalt gezogen. Dabei wird durch Dreschleisten das Erntegut gedroschen, wobei ein Korn-Spreu-Gemisch durch den Dreschkorb 10 nach unten fällt, welches dann der Reinigungseinrichtung 13 zugeführt wird, um die Körner von den Beimengungen, das heißt von Halm- und Spreuteilen, zu trennen.

Vom Dreschwerk 8 wird das gedroschene Erntegut über die Wendetrommel 11 auf den Hordenschüttler 12 gelenkt, durch den die noch im Erntegutstrom befindlichen Körner sowie Kurzstroh und Spreu abgetrennt werden. Die Körner, das Kurzstroh und die Spreu gelangen dann ebenfalls in die Reinigungseinrichtung 13, in welcher die Körner vom Kurzstroh und Spreu getrennt werden. Dies erfolgt in der Weise, dass durch Sieböffnungen in den oszillierend angetriebenen Sieben 14 mittels des Gebläses 15 Wind hindurchgeblasen wird, welcher das über die Siebe 14 geführte Erntegut auflockert und für das Heraustrennen der spezifisch leichteren Spreu- und Kurzstrohanteile sorgt, während die schweren Erntegutkörner durch die Sieböffnungen fallen. Die Siebe 14 sind hierbei teilweise übereinander angeordnet, so dass das Erntegut in verschiedenen Stufen unterschiedlich fein gesiebt wird. Die Körner, welche durch sämtliche Siebe 14 der Reinigungsvorrichtung 13 gelangt sind, fallen auf die Auffang- und Führungsböden und werden einer Kornförderschnecke zugeführt. Sie werden dann von einem Elevator 16 in einen Korntank 17 des Mähdreschers 1 befördert und können dort bei Bedarf mit einem Korntankentleerförderer 18 auf einen Transportwagen umgeladen werden. Die Bestandteile des Erntegutes, die in der Reinigungsvorrichtung 13 auf dem oberen der Siebe 14 bis zum hinteren Ende gelangen, sind in der Regel schwerere Teile, das heißt Teile, welche ein Korn enthalten, welches sich aber nicht vollständig von anderen Bestandteilen des Erntegutes gelöst hat. Diese Bestandteile können über einen weiteren Elevator 41 als so genannte Überkehr noch einmal zum Dreschwerk 8 zurückgeführt werden.

Bestandteile des Erntegutstromes, die nicht durch das obere Sieb 14 fallen, werden als Verlustkorn ausgeworfen. Ebenso wandern das Stroh sowie ein bestimmter Prozentsatz an Verlustkörnern über den Hordenschüttler 12 zum hinteren Ende des Mähdreschers 1 und werden dort ausgeworfen.

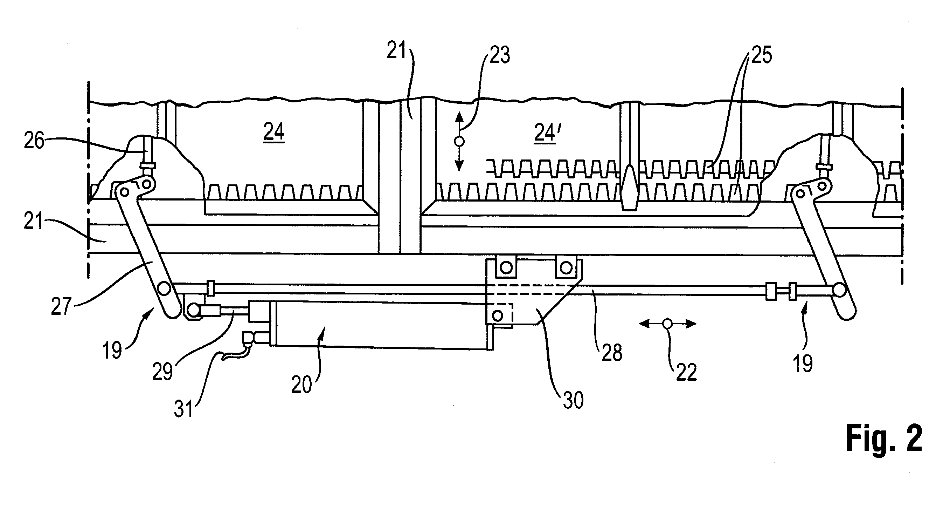

Figur 2 zeigt eine Draufsicht auf eine Anordnung einer Verstelleinrichtung 19 zur Veränderung der Öffnungsweite eines Siebes 14 der Reinigungseinrichtung 13. Die Verstelleinrichtung 19 umfasst einen Verstellantrieb 20, der ist an einem Siebrahmen 21 angeordnet ist. Die Betätigungsrichtung 22 des Verstellantriebes 20 ist annähernd senkrecht zur Schwingrichtung 23 der Siebe 14. Dargestellt ist das Sieb 14, welches sich aus zwei, in einer horizontalen Ebene im Siebrahmen 21, die nachfolgend als Siebebene E bezeichnet wird, nebeneinander angeordneten Teilsieben 24, 24' zusammensetzt. Jedes Teilsieb 24, 24' weist eine Vielzahl von Lamellenreihen 25 auf, die in Längsrichtung des Mähdreschers 1 gesehen hintereinander angeordnet sind. Die Öffnungsweite der schematisch dargestellten Lamellenreihen 25 kann mittels einer Stange 26, einem Umlenkhebel 27 und einer Verbindungsstange 28 eingestellt werden. Eine Kolbenstange 29 des Verstellantriebes 20 greift an der Verbindungsstange 28 an, so dass die Öffnungsweite der beiden Teilsiebe 24, 24' durch den Verstellantrieb 20 gleichsinnig verstellt werden kann. Der Verstellantrieb 20 stützt sich gelenkig über einen Halter 30 direkt an dem Siebrahmen 21 ab. Über eine flexible, mehradrige, elektrische Leitung 31, welche an dem Siebrahmen 21 in einer Kabelrinne verlegt ist, wird der Verstellantrieb 20 gesteuert sowie eine ermittelte Sieböffnungsweite einer Steuerungsvorrichtung 32 rückgemeldet beziehungsweise dem Bediener in einer Fahrerkabine 33 angezeigt.

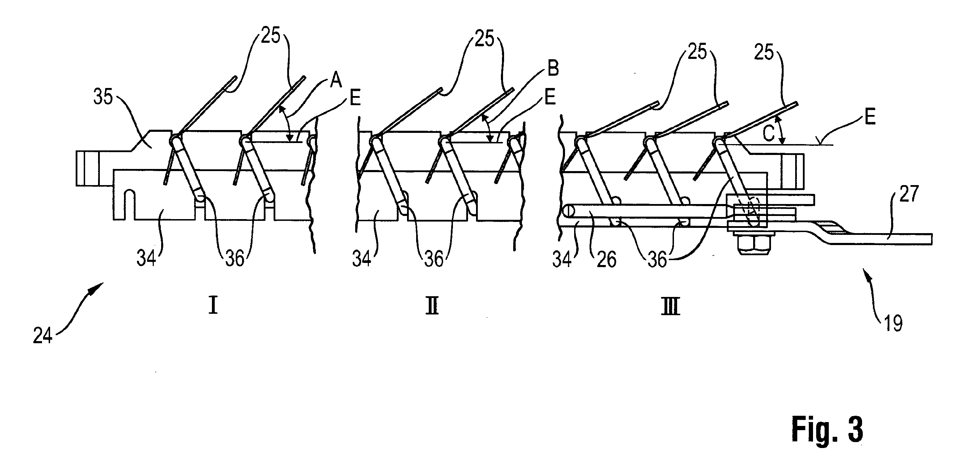

Fig. 3 zeigt eine schematische Teilansicht eines Siebes 14 im Längsschnitt, welches in drei Abschnitte, einen ersten Abschnitt I, einen zweiten Abschnitt II und einen dritten Abschnitt III unterteilt ist. Denkbar ist aber auch eine Unterteilung in nur zwei oder mehr als drei Abschnitte, was von der Länge des Siebes 14 abhängig ist. Am Förderende des Siebes 14 ist die Verstelleinrichtung 19 angeordnet, von der jedoch nur der Umlenkhebel 27 angedeutet ist. Der Umlenkhebel 27 greift an der Stange 26 an, welche wiederum ein als Verstellschiene 34 ausgeführtes Verstellmittel betätigt. Die Verstellschiene 34 ist kammartig ausgebildet und greift unterhalb eines Mittelsteges 35 des Siebrahmens 21 in die senkrecht zu der Verstellschiene 34 verlaufenden, kurbelwellenartig ausgebildeten Lamellendrähte 36 der Lamellenreihen 25 ein. Eine Bewegung der Verstellschiene 34 bewirkt eine direkte Veränderung der Öffnungsweite des Siebes 14, das heißt eines Öffnungswinkels A, B, C den die jeweilige Lamellenreihe 25 eines Abschnitte I, II, III mit der Siebebene E einschließt.

Um eine sich an den Abscheideverlauf über die Sieblänge orientierende Anpassung der Öffnungsweite des Siebes 14 beziehungsweise der Teilsiebe 24, 24' unter Beibehaltung des axialen Abstandes der Lamellenreihen 25 zueinander sowie unter Beibehaltung einer einheitlichen Lamellengröße zu erreichen, weist das Sieb 14 beziehungsweise weisen die jeweiligen Teilsiebe 24, 24' eine Unterteilung in zumindest zwei oder mehr Abschnitte I, II, III in ihrer Längsrichtung, das heißt in Erntegutförderrichtung, auf, in denen sich bei einer Betätigung der Verstelleinrichtung 19 unterschiedliche Öffnungswinkel A, B, C gegenüber der Siebebene E einstellen.

Dies wird gemäß dem in Fig. 3 dargestellten Ausführungsbeispiel dadurch erreicht, dass die kurbelwellenartig ausgebildeten Lamellendrähte 36 eines jeden Abschnittes I, II, III des Teilsiebes 24, 24' unterschiedliche Kröpfungen aufweisen. Die Variation der Länge der Kröpfung der Lamellendrähte 36 in den einzelnen Abschnitten I, II, III bewirkt, dass die jeweiligen Lamellenreihen 25 eines Abschnittes I, II, III unterschiedliche Öffnungswinkel A, B, C mit der Siebebene E einschließen.

So ist die Kröpfung der Lamellendrähte 36 im ersten Abschnitt I kleiner als im dem in Erntegutförderrichtung gesehen darauffolgenden zweiten Abschnitt II, womit sich beim Öffnen des Teilsiebes 24, 24' durch die Betätigung der Verstelleinrichtung 19 im ersten Abschnitt I ein Öffnungswinkel A einstellt, der größer als der Öffnungswinkel B in dem nachfolgenden zweiten Abschnitt II ist. Entsprechendes gilt für einen dem zweiten Abschnitt II benachbarten dritten Abschnitt III. Hier ist der Öffnungswinkel B des zweiten Abschnittes II größer als der Öffnungswinkel C des dritten Abschnittes III. Die Größe des sich einstellenden Öffnungswinkels A, B, C bestimmt die Öffnungsweite des Teilsiebes 24, 24' in dem jeweiligen Abschnitt I, II, III. Entsprechend der Zusammensetzung des zu reinigenden Erntegutstromes ist der Kornanteil, der dem Erntegutstrom entzogen werden soll, im ersten Abschnitt I des Teilsiebes 24, 24' im Allgemeinen am größten, so dass hier mit der größten Öffnungsweite gearbeitet wird. Dies bedeutet auch, dass der Anteil des Luftvolumenstromes, der durch das Gebläse 15 den Sieben 14 zugeführt wird und zu Reinigungszwecken durch die Sieböffnungen strömt, im Allgemeinen am größten ist. Wird hingegen das Sieb 14 beziehungsweise werden die Teilsiebe 24, 24' durch die Betätigung der Verstelleinrichtung 19 geschlossen, so werden alle Lamellenreihen 25 in eine Position überführt, in welcher sie zumindest annähernd parallel zur Siebebene E ausgerichtet sind. Es lässt sich somit ein näherungsweise vollständiges Verschließen des Siebes 14 über alle Abschnitte I, II, III erreichen, was gemäß dem Stand der Technik, der entweder mit einem axialem Versatz der Lamellenreihen sowie mit unterschiedlichen Lamellengrößen arbeitet, nicht erreichbar ist.

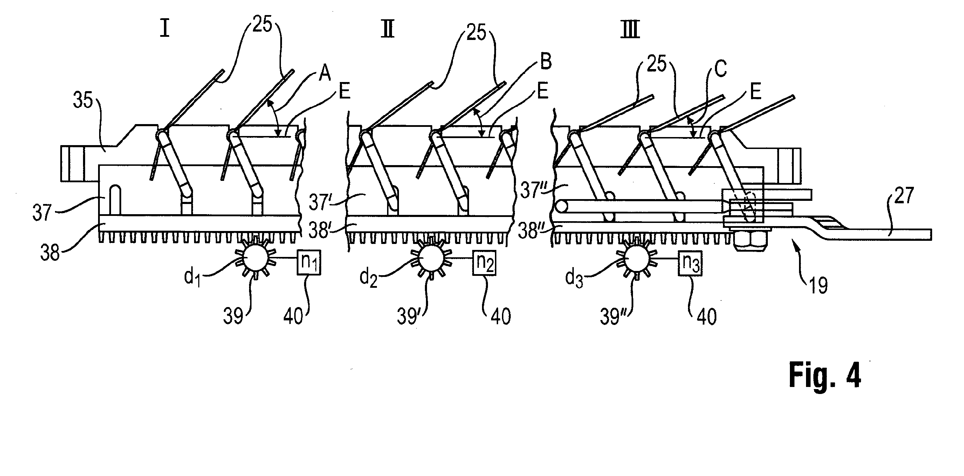

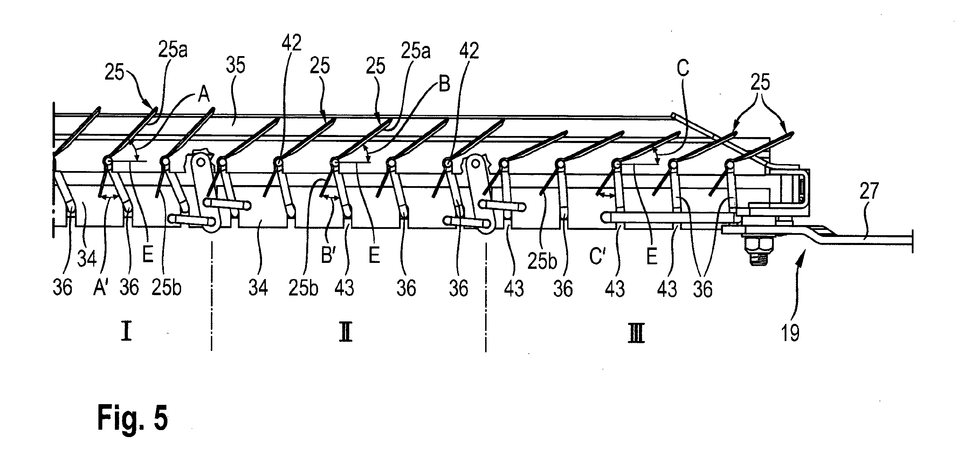

Gemäß einer zweiten in Fig. 4 dargestellten Ausführungsform ist vorgesehen, dass die als Verstellmittel ausgeführte Verstellschiene 34 in mehrere Teilschienen 37, 37', 37" unterteilt ist, die mit jeweils einer der jeweiligen Teilschiene 37. 37', 37" zugeordneten Zahnstange 38, 38', 38" versehen sind, die sich parallel zum Siebrahmen 21 erstrecken.

Den jeweiligen Zahnstangen 38, 38', 38" ist zumindest ein Zahnrad 39, 39', 39" zugeordnet, welches mit der Verzahnung der Zahnstange 38, 38', 38" kämmt. Die jeweiligen Zahnräder 39, 39', 39" sind hierbei einzelmotorisch durch einen Elektromotor 40 antreibbar. Alternative Antriebsformen sind pneumatische oder hydraulische Antriebe, die die Zahnräder 39, 39', 39" ebenfalls einzelmotorisch oder, über eine gemeinsame Antriebswelle gekoppelt, gemeinsam antreiben können. Um den gewünschten Öffnungswinkel A, B, C einstellen zu können, weisen die Zahnräder 39, 39', 39" des jeweiligen Abschnittes I, II, III unterschiedliche Durchmesser auf, wodurch sich unterschiedliche Übersetzungsverhältnisse einstellen. Entsprechend führt das Drehen des jeweiligen Zahnrades 39, 39', 39" in dem jeweiligen Abschnitt I, II, III des Teilsiebes 24, 24' zu einem unterschiedlichen Öffnungswinkel A, B, C.

Eine alternative Ausführungsform sieht vor, dass die Verstellschiene 34 in eine der Anzahl von Abschnitten I, II, III entsprechende Anzahl von Teilschienen unterteilt ist, die über jeweils eine Hebelanordnung mit der Verstelleinrichtung 19 verbunden sind. Durch die für den jeweiligen Abschnitt I, II, III gewählte Hebelübersetzung lässt sich der zuvor beschriebene Effekt ebenfalls erreichen.

Vorteilhaft an jeder der zuvor beschriebenen Verstelleinrichtung ist, dass sich in den jeweiligen Abschnitten I, II, III unterschiedliche Öffnungswinkel A, B, C der jeweiligen Lamellenreihen 25 darstellen lassen. So können beispielsweise alle hintereinander angeordneten Abschnitte I, II, III des mindestens einen Siebes 14 unterschiedliche Öffnungswinkel A, B, C der jeweiligen Lamellenreihen 25 eines Abschnittes I, II, III aufweisen. Ein zweiter vorteilhafter Effekt resultiert daraus, dass in geschlossener Position der Lamellenreihen 25, das heißt wenn die Öffnungswinkel A, B, C gegen Null tendieren, die sich einstellende Sieböffnungsweite in allen Abschnitten I, II, II gleich groß ist, unabhängig von den sich im Übrigen einstellenden Öffnungswinkeln A, B, C.

**Bezugszeichenliste**

| | | | |
|---|---|---|---|
| **1** | Mähdrescher | **30** | Halter |
| **2** | Mähtisch | **31** | Leitung |
| **3** | Haspel | **32** | Steuerungsvorrichtung |
| **4** | Mäheinrichtung | **33** | Fahrerkabine |
| **5** | Einzugsschnecke | **34** | Verstellschiene |
| **6** | Einzugskanal | **35** | Mittelsteg |
| **7** | Vorbeschleunigertrommel | **36** | Lamellendraht |
| **8** | Tangentialdreschwerk | **37** | Teilschiene |
| **9** | Dreschtrommel | **37'** | Teilschiene |
| **10** | Dreschkorb | **37"** | Teilschiene |
| **11** | Wendetrommel | **38** | Zahnstange |
| **12** | Hordenschüttler | **38'** | Zahnstange |
| **13** | Reinigungseinrichtung | **38"** | Zahnstange |
| **14** | Sieb | **39** | Zahnrad |
| **15** | Gebläse | **39'** | Zahnrad |
| **16** | Elevator | **39"** | Zahnrad |
| **17** | Korntank | **40** | Elektromotor |
| **18** | Korntankentleerförderer | **41** | Elevator |
| **19** | Verstelleinrichtung | | |
| **20** | Verstellantrieb | **A** | Öffnungswinkel |
| **21** | Siebrahmen | **B** | Öffnungswinkel |
| **22** | Betätigungsrichtung | **C** | Öffnungswinkel |
| **23** | Schwingungsrichtung | **E** | Siebebene |
| **24** | Teilsieb | **I** | Erster Abschnitt |
| **24'** | Teilsieb | **II** | Zweiter Abschnitt |
| **25** | Lamellenreihen | **III** | Dritter Abschnitt |
| **26** | Stange | | |
| **27** | Umlenkhebel | | |
| **28** | Verbindungsstange | | |
| **29** | Kolbenstange | | |

## Patentansprüche

1. Mähdrescher (1) mit einer Reinigungsvorrichtung (14), umfassend wenigstens ein luftdurchströmtes Sieb (14, 24, 24'), welches in einem Siebrahmen (21) eine Vielzahl von auf Drehachsen (36) schwenkbar gelagerten Lamellenreihen (25) zur Verstellung der Sieböffnungsweite des Siebes (14, 24, 24') aufweist, die durch eine Verstelleinrichtung (19) betätigbar sind, wobei das wenigstens eine Sieb (14, 24, 24') mindestens zwei hintereinander angeordnete Abschnitte (I, II, III) mit darin gelagerten, durch die Verstelleinrichtung (19) gemeinsam betätigbaren Lamellenreihen (25) aufweist, und wobei zumindest in zwei benachbarten Abschnitten (I, II; I, III) sich bei einer Betätigung der Verstelleinrichtung (19) zur Verstellung der Sieböffnungsweite bei gleicher Lamellengröße unterschiedliche Öffnungswinkel (A, B, C) gegenüber einer vom Siebrahmen (21) umfassten horizontalen Siebebene (E) einstellen **dadurch gekennzeichnet, dass** die Lamellenreihen (25) in dem jeweils vorangehenden Abschnitt (I, II) einen größeren Öffnungswinkel (A, B, C) aufweisen als in dem nachfolgenden Abschnitt (II, III).

2. Mähdrescher (1) nach Anspruch 1, **dadurch gekennzeichnet, dass** alle hintereinander angeordneten Abschnitte(I, II, III) des mindestens einen Siebes (14, 24, 24') unterschiedliche Öffnungswinkel (A, B, C) der jeweiligen Lamellenreihen (25) aufweisen.

3. Mähdrescher (1) nach Anspruch 1, **dadurch gekennzeichnet, dass** eine wechselweise Variation der Öffnungswinkel (A, B, C) vorgesehen ist.

4. Mähdrescher (1) nach einem der Ansprüche 1 bis 4, **dadurch gekennzeichnet, dass** bei einer Überführung der Lamellenreihen (25) in eine zur Siebebene (E) im Wesentlichen parallele Position, in der die Sieböffnungsweite minimiert ist, weisen alle Abschnitte (I, II, III) des Siebes (14, 24, 24') die gleiche Sieböffnungsweite auf.

5. Mähdrescher (1) nach einem der Ansprüche 1 bis 5, **dadurch gekennzeichnet, dass** die Drehachsen (36) durch Verstellmittel (37, 37', 37"; 38. 38', 38") kinematisch miteinander gekoppelt sind.

6. Mähdrescher (1) nach einem der Ansprüche 1 bis 6, **dadurch gekennzeichnet, dass** die Drehachsen als gekröpfte Lamellendrähte (36) ausgebildet sind, die drehbar in dem Siebrahmen (21) gelagert sind.

7. Mähdrescher (1) nach Anspruch 7, **dadurch gekennzeichnet, dass** die Lamellendrähte (36) des jeweiligen Abschnittes (I, II, III) eine unterschiedliche Kröpfung aufweisen.

8. Mähdrescher (1) nach einem der Ansprüche 1 bis 6, **dadurch gekennzeichnet, dass** die Verstelleinrichtung als eine zumindest zweigeteilte Verstellstange ausgeführt sind, die jeweils eine Hebelübersetzung zwischen den Teilabschnitten der Verstellstange aufweist.

9. Mähdrescher (1) nach einem der Ansprüche 1 bis 6, **dadurch gekennzeichnet, dass** die Verstelleinrichtung als zumindest zwei Zahnstangen (38, 38', 38") ausgeführt sind, die jeweils von einem Zahnrad (39, 39', 39") in axialer Richtung bewegbar sind.

10. Mähdrescher (1) nach einem der Ansprüche 1 bis 10, **dadurch gekennzeichnet, dass** die Verstelleinrichtung elektromotorisch antreibbar sind.

11. Mähdrescher (1) nach einem der Ansprüche 1 bis 10, **dadurch gekennzeichnet, dass** die Verstelleinrichtung pneumatisch oder hydraulisch antreibbar sind.

## Claims

1. A combine harvester (1) having a cleaning device (14) including at least one sieve (14, 24, 24') through which air flows and which in a sieve frame (21) has a plurality of rows of slats (25) mounted pivotably on axes of rotation (36) for adjusting the sieve opening width of the sieve (14, 24, 24'), which are actuable by an adjusting device (19),wherein the at least one sieve (14, 24, 24') has at least two successively arranged portions (I, II, III) with rows of slats (25) mounted therein and actuable jointly by the adjusting device (19) and wherein at least in two adjacent portions (I, II; I, III) upon actuation of the adjusting device (19) for adjusting the sieve opening width with the same slat size different opening angles (A, B, C) are set with respect to a horizontal sieve plane (E) embraced by the sieve frame (21), **characterised in that** the rows of slats (25) in the respectively preceding portion (I, II) have a greater opening angle (A, B, C) than in the following portion (II, III).

2. A combine harvester (1) according to claim 1 **characterised in that** all successively arranged portions (I, II, III) of the at least one sieve (14, 24, 24') have different opening angles (A, B, C) of the respective rows of slats (25).

3. A combine harvester (1) according to claim 1 **characterised in that** there is provided an alternate variation in the opening angles (A, B, C).

4. A combine harvester (1) according to one of claims 1 to 4 **characterised in that** upon transfer of the rows of slats (25) into a position which is substantially parallel to the sieve plane (E) and in which the sieve opening width is minimised all portions (I, II, III) of the sieve (14, 24, 24') involve the same sieve opening width.

5. A combine harvester (1) according to one of claims 1 to 5 **characterised in that** the axes of rotation (36) are kinematically coupled together by adjusting means (37, 37', 37"; 38, 38', 38").

6. A combine harvester (1) according to one of claims 1 to 6 **characterised in that** the axes of rotation are in the form of cranked slat wires (36) mounted rotatably in the sieve frame (31).

7. A combine harvester (1) according to claim 6 **characterised in that** the slat wires (36) of the respective portion (I, II, III) have a different crank configuration.

8. A combine harvester (1) according to one of claims 1 to 6 **characterised in that** the adjusting device is in the form of an at least two-part adjusting rod which has a respective lever transmission means between the portions of the adjusting rod.

9. A combine harvester (1) according to one of claims 1 to 6 **characterised in that** the adjusting device is in the form of at least two racks (38, 38', 38") which are respectively moveable in the axial direction by a gear (39, 39', 39").

10. A combine harvester (1) according to one of claims 1 to 10 **characterised in that** the adjusting device is drivable by an electric motor.

11. A combine harvester (1) according to one of claims 1 to 10 **characterised in that** the adjusting device is drivable pneumatically or hydraulically.

## Revendications

1. Moissonneuse-batteuse (1) dotée d'un dispositif de nettoyage (14), comprenant au moins une grille (14, 24, 24') traversée par un flux d'air, laquelle présente dans un cadre de grille (21) une pluralité de rangées de lamelles (25) qui sont montées pivotantes sur des axes de rotation (36) pour régler la largeur d'ouverture de grille de la grille (14, 24, 24') et qui peuvent être actionnées par un dispositif de réglage (19), ladite au moins une grille (14, 24, 24') présentant au moins deux sections (I, II, III) qui sont disposées l'une derrière l'autre et dans lesquelles sont montées des rangées de lamelles (25) pouvant être actionnées ensemble par le dispositif de réglage (19) et, dans au moins deux sections adjacentes (I, II ; I, III), des angles d'ouverture (A, B, C) différents par rapport à un plan de grille horizontal (E) défini par le cadre de grille (21) étant obtenus, à taille de lamelles égale, lors d'un actionnement du dispositif de réglage (19) pour régler la largeur d'ouverture de grille, **caractérisée en ce que** les rangées de lamelles (25) présentent dans la section respectivement précédente (I, II) un angle d'ouverture (A, B, C) plus grand que dans la section suivante (II, III).

2. Moissonneuse-batteuse (1) selon la revendication 1, **caractérisée en ce que** toutes les sections (I, II, III) disposées l'une derrière l'autre de ladite au moins une grille (14, 24, 24') présentent des angles d'ouverture (A, B, C) différents des rangées de lamelles (25) respectives.

3. Moissonneuse-batteuse (1) selon la revendication 1, **caractérisée en ce qu'**une variation alternative des angles d'ouverture (A, B, C) est prévue.

4. Moissonneuse-batteuse (1) selon l'une des revendications 1 à 4, **caractérisée en ce que**, lors d'un transfert des rangées de lamelles (25) dans une position sensiblement parallèle au plan de grille (E), dans laquelle la largeur d'ouverture de grille est minimalisée, toutes les sections (I, II, III) de la grille (14, 24, 24') présentent la même largeur d'ouverture de grille.

5. Moissonneuse-batteuse (1) selon l'une des revendications 1 à 5, **caractérisée en ce que** les axes de rotation (36) sont couplés entre eux cinématiquement par des moyens de réglage (37, 37', 37" ; 38, 38', 38").

6. Moissonneuse-batteuse (1) selon l'une des revendications 1 à 6, **caractérisée en ce que** les axes de rotation sont réalisés sous la forme de fils de lamelles coudés (36) qui sont montés rotatifs dans le cadre de grille (21).

7. Moissonneuse-batteuse (1) selon la revendication 7, **caractérisée en ce que** les fils de lamelles (36) de la section (I, II, III) respective présentent un coudage différent.

8. Moissonneuse-batteuse (1) selon l'une des revendications 1 à 6, **caractérisée en ce que** le dispositif de réglage est réalisé sous la forme d'une tige de réglage au moins en deux parties, qui présente un rapport de transmission de leviers entre les parties de la tige de réglage.

9. Moissonneuse-batteuse (1) selon l'une des revendications 1 à 6, **caractérisée en ce que** le dispositif de réglage est réalisé sous la forme d'au moins deux crémaillères (38, 38', 38") qui sont déplaçables dans la direction axiale par une roue dentée (39, 39', 39") respective.

10. Moissonneuse-batteuse (1) selon l'une des revendications 1 à 10, **caractérisée en ce que** le dispositif de réglage peut être entraîné par un moteur électrique.

11. Moissonneuse-batteuse (1) selon l'une des revendications 1 à 10, **caractérisée en ce que** le dispositif de réglage peut être entraîné par voie pneumatique ou hydraulique.
